# EUROPEAN PATENT APPLICATION

(11) **EP 4 148 584 A1**
(43) Date of publication of application: **15.03.2023**
(21) Application number: 21196560.3
(22) Date of filing: 14.09.2021
(51) Int. Cl.: G06F 11/36

(54) **METHOD AND SYSTEM FOR GENERATING AND OPTIMIZING TEST CASES FOR AN ENGINEERING PROGRAM**

(71) Applicant: Siemens Aktiengesellschaft, 80333 München (DE)
(72) Inventor: Bhalla, Vipul, 284003 Jhansi, Uttar Pradesh (IN); Kavdiya, Ashish, 560054 Bangalore, Maharashtra (IN); N, Madhusudanan, 560036 Bengaluru, Karnataka (IN); SARKAR, SOURJYA, 700089 Kolkata, West Bengal (IN); Antony, Elvis, 560102 Bangalore, Karnataka (IN); Kamath, Yogesh, 560076 Bangalore, Karnataka (IN); Chenecharry, Vivek, 670662 Kannur, Kerala (IN); Singh, Saurabh, 560035 Bangalore, Karnataka (IN)
(74) Representative: Isarpatent

(57) **Abstract**

The present invention provides a method and system for generating and optimizing test cases for an engineering program based on a constraint satisfaction problem. In one embodiment, the method comprises generating a plurality of tripartite graphs for the engineering program. Each of the generated plurality of tripartite graphs comprises a constraint satisfaction problem associated with a specific code statement of the plurality of code statements. Furthermore, the method comprises generating a plurality of test cases for the engineering program based on the plurality of tripartite graphs such that the generated plurality of test cases are limited by the generated test case constraints. Moreover, the method comprises optimizing the generated plurality of test cases based on an analysis of the engineering program.

## Description

The present invention relates to a field of engineering of computer assisted engineering programs, and more particularly relates to a method and system for generating and optimizing test cases for an engineering program.

Typically, an engineering project comprises a plurality of engineering programs. Each of the plurality of engineering programs have to be tested prior to their deployment in an industrial environment. A program tester may use a set of test cases for testing an engineering program of the engineering project. Each of the set of test cases contains a set of values which are to be assigned to one or more variables and arguments used in the engineering program during testing of the engineering program. A flow of the engineering program depends on a combination of the set of values assigned to the one or more variables and arguments used in the engineering program. For example, if an argument in the engineering program is used in conjunction with a conditional statement, a loop statement, or a jump statement then a processor which executes the engineering program, may execute different code statements depending on a value given to the argument. In other words, depending on initial values and input conditions entered into the one or more variables and arguments, the engineering program has a plurality of flow paths which are different from each other.

A subset of all flow paths of the engineering program that are traversed for a specific test case of the set of test cases is termed as a test case path coverage. Typically, a program tester manually develops a set of test cases that ensure traversal of all possible flow paths of all lines of code in the engineering program.In order to generate the set of test cases, the program tester may have to consider several thousand lines of code in the engineering program. It is difficult for the program tester to generate a limited number of optimal test cases which cover the plurality of flow paths of the engineering program effectively.

In light of above, there exists a need for an efficient method and system for generating and optimizing test cases for an engineering program.

Therefore, it is an object of the present invention to provide a method and system for generating and optimizing test cases for an engineering program.

The object of the present invention is achieved by a method of generating and optimizing test cases for an engineering program. In a preferred embodiment, the method comprises receiving by a processing unit, a request to generate a plurality of test cases for an engineering program which comprises a plurality of code statements. The plurality of code statements comprises assignment statements, program element definition statements, and operation statements.

The engineering program is designed to control operation of a plurality of devices in a technical installation. Examples of the plurality of devices include but is not limited to, programmable logic controllers, computers, motor drivers, control units, microcontrollers, human machine interfaces, edge servers, and industrial control systems. The technical installation may be an industrial manufacturing plant, an industrial processing plant, or an industrial power plant.

In the preferred embodiment, the plurality of devices function together in the technical installation to achieve one or more objectives of the technical installation. Each of the plurality of devices may comprise a processing unit and a memory. The memory is configured to store the engineering program. The processing unit in the plurality of devices is configured to execute the engineering program to achieve one or more key performance indicators associated with the engineering program. Examples of the one or more key performance indicators includes a processing speed, a memory requirement, and a process efficiency of the engineering program.

The method comprises generating, by the processing unit, a plurality of tripartite graphs for the engineering program. Each of the generated plurality of tripartite graphs comprises a constraint satisfaction problem associated with a specific code statement of the plurality of code statements. Each of the plurality of tripartite graphs comprises a set of input variables, a set of constraints and a set of domain values associated with a specific code statement of the plurality of code statements. A first edge of each of the plurality of tripartite graph represents a presence of the set of input variables in a given constraint set and information about a plurality of values from the given constraint set which can be assigned to the set of input variables of the engineering program. In one example, each vertex of each of the plurality of tripartite graphs is represented as a vector. Each edge of each of the plurality of tripartite graphs is represented as a plurality of tensors.

In the preferred embodiment, the method comprises generating, by the processing unit, a plurality of test case constraints for the engineering program, by application of a machine learning algorithm on the plurality of tripartite graphs. Each test case constraint of the generated plurality of test case constraints defines limits on the set of values provided in the plurality of test cases. The machine learning algorithm uses a graph convolution neural network which is configured to approximate each constraint of the constraint satisfaction problems of the plurality of tripartite graphs into the generated plurality of test case constraints. In other words, the graph convolution neural network is configured to take the plurality of tripartite graphs as input and capture interdependencies and interactions between neighbouring vertices in the plurality of tripartite graphs. Furthermore, the graph convolution neural network is configured to generate an ontological representation of the set of input variables. The plurality of test case constraints comprises constraints to allowable values which can be assigned to the plurality of test cases which is to be generated for the engineering program. In one example, the machine learning algorithm is trained using one of a supervised learning process and an unsupervised learning process. Advantageously, the plurality of test case constraints are approximations of each constraint satisfaction problem of the plurality of tripartite graphs associated with the engineering program. Advantageously, the machine learning algorithm generalizes each constraint satisfaction problem of the plurality of tripartite graphs into the plurality of test case constraints. The plurality of test case constraints are common solutions to a plurality of constraint satisfaction problems of the plurality of tripartite graphs.

Additionally, the method comprises generating, by the processing unit, the plurality of test cases for the engineering program, based on the plurality of tripartite graphs such that the generated plurality of test cases are limited by the generated plurality of test case constraints. Advantageously, the generated plurality of test cases are limited. Advantageously, the plurality of test cases are generated automatically without manual intervention. Also, time and labour required from a program tester is significantly reduced.

The method comprises generating, by the processing unit, a knowledge graph for the engineering program, by analysis of the plurality of code statements. The processing unit is configured to analyse the plurality of code statements by application of a natural language processing algorithm on the plurality of code statements of the engineering program. The knowledge graph comprises information about relationships between the determined plurality of code statements. The knowledge graph comprises information about data flow and control flow between each of the plurality of code statements. The method comprises determining, by the processing unit, a plurality of control flow paths of the engineering program at a plurality of scenarios based on an analysis of the generated knowledge graph. Each scenario of the plurality of scenarios denote a different input value and a different initial condition of a plurality of variables in the engineering program. The method comprises generating, by the processing unit, a key-value pair mapping between a plurality of variables in the engineering program and a plurality of values within the generated plurality of test cases based on an analysis of the generated knowledge graph. The method comprises determining, by the processing unit, for each code statement of the plurality of code statements, a subsequently executed code statement based on an analysis of the generated key-value pair mapping.

In the preferred embodiment, the method comprises generating, by the processing unit, a stack comprising the generated key-value pair mapping associated with each test case of the generated plurality of test cases. The method comprises determining, by the processing unit, a test path taken by each test case of the generated plurality of test cases based on the analysis of the knowledge graph. The method comprises determining a test path coverage for each of the generated plurality of test cases based on an analysis of the test path determined for each test case of the generated plurality of test cases. The method comprises optimizing, by the processing unit each of the plurality of test cases based on an analysis of the determined test path coverage of each of the generated plurality of test cases. The test path taken by each test case is determined based on a querying of the knowledge graph by the processing unit. In one example, the plurality of test cases are optimized by removing those test cases from the plurality of test cases for which a determined test path coverage is lower than a threshold.

The object of the invention is also achieved by a method of generating and optimizing test cases for a new version of an engineering program based on an old version of the engineering program.

In a preferred embodiment, the method comprises receiving, by the processing unit, a request to generate a plurality of test cases for a new version of an engineering program from an old version of the engineering program. The method comprises generating, by the processing unit, a first knowledge graph and a second knowledge graph based on the new version and the old version of the engineering program, respectively. The method comprises determining, by the processing unit, a first set of control flow paths for the new version of the engineering program and a second set of control flow paths for the old version of the engineering program based on the first knowledge graph and the second knowledge graph. The method comprises determining, by the processing unit, one or more control flow paths of the first set of control flow paths, which are different compared to one or more corresponding control flow paths of the second set of control flow paths. The method comprises generating, by the processing unit, the plurality of test cases for the new version of an engineering program based on the determined one or more control flow paths of the first set of control flow paths.

The method comprises analyzing, by the processing unit, the first knowledge graph and the second knowledge graph to determine one or more errors in the new version of the engineering program. The method comprises modifying, by the processing unit, the new version of the engineering program to eradicate the determined one or more errors in the new version of the engineering program.

The method comprises generating, by the processing unit, a simulation instance for the engineering program. The method comprises simulating, by the processing unit, execution of the generated engineering program in an industrial environment by executing the engineering program on the generated simulation instance.

The object of the present invention is also achieved by a method of generating and optimizing test cases for a new version of an engineering program based on an old version of the engineering program. The method comprises receiving, by a processing unit, a request to generate a plurality of test cases for a new version of an engineering program from an old version of the engineering program. Furthermore, the method comprises generating, by the processing unit, a first knowledge graph and a second knowledge graph based on the new version and the old version of the engineering program respectively. The method comprises determining, by the processing unit, a first set of control flow paths for the new version of the engineering program and a second set of control flow paths for the old version of the engineering program based on the first knowledge graph and the second knowledge graph. The method comprises determining, by the processing unit, one or more control flow paths of the first set of control flow paths which are different compared to one or more corresponding control flow paths of the second set of control flow paths. The method comprises generating, by the processing unit, the plurality of test cases for the new version of the engineering program based on the determined one or more control flow paths of the first set of control flow paths.

The object of the present invention is achieved by a method of optimizing a plurality of test cases. The method comprises receiving, by the processing unit, a request to optimize a plurality of test cases. The method comprises generating, by the processing unit, a knowledge graph for an engineering program by analysing a plurality of code statements of the engineering program. The knowledge graph comprises information about relationships between the plurality of code statements, and information about data flow and control flow between each of the plurality of code statements. The method comprises determining, by the processing unit, a plurality of control flow paths of the engineering program at a plurality of scenarios based on an analysis of the generated knowledge graph. Each scenario of the plurality of scenarios denote a different input value and a different initial condition of a plurality of variables in the engineering program. The method comprises determining a test path coverage for each of the generated plurality of test cases based on an analysis of the determined plurality of control paths and the generated knowledge graph. The method comprises optimizing, by the processing unit each of the plurality of test cases based on an analysis of the determined test path coverage of each of the plurality of test cases.

The object of the present invention is also achieved by an engineering system for generating engineering projects compatible with a specific engineering environment. The engineering system comprises one or more processor(s) and a memory coupled to the processor(s). The memory comprises an automation module stored in the form of machine-readable instructions executable by the processor. The automation module is configured for performing the method as described above.

The object of the present invention is also achieved by an industrial environment. The industrial environment comprising an engineering system, a technical installation comprising one or more physical components, and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of generating and optimizing a plurality of test cases for a specific engineering program, according to an embodiment of the present invention;
- FIG 2: is a block diagram of an engineering system, such as those shown in FIG 1, in which an embodiment of the present invention can be implemented;
- FIG 3: is a block diagram of an automation module, such as those shown in FIG 2, in which an embodiment of the present invention can be implemented;
- FIG 4A-C: is a process flowchart illustrating an exemplary method of generating and optimizing a plurality of test cases for a specific engineering program, according to an embodiment of the present invention;
- FIG 5A-B: is a process flowchart illustrating an exemplary method of generating and optimizing a plurality of test cases for a specific version of an engineering program, according to an embodiment of the present invention; and
- FIG 6: is a process flowchart illustrating an exemplary method of generating and optimizing a plurality of test cases for a specific version of an engineering program, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

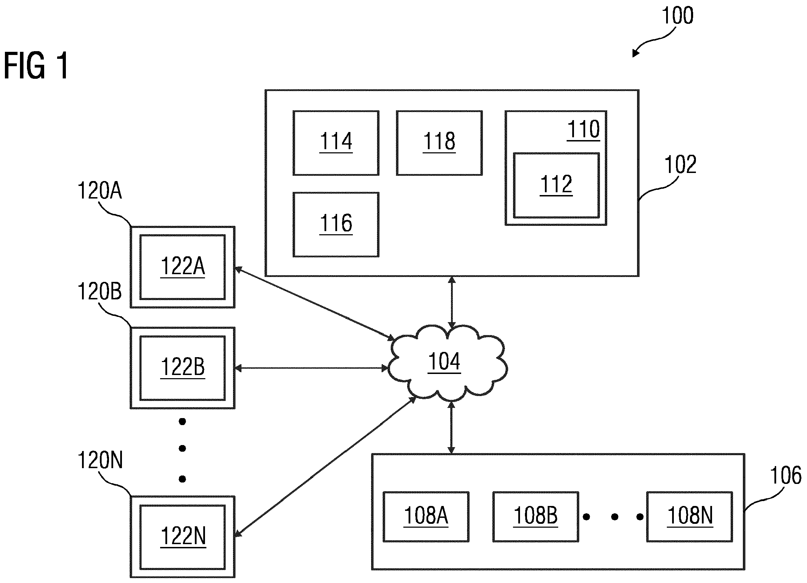

FIG 1 is a block diagram of an industrial environment 100 capable of generating and optimizing a plurality of test cases for a specific engineering program, according to an embodiment of the present invention. In FIG 1, the industrial environment 100 includes an engineering system 102, a technical installation 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the technical installation 106 via the network 104 (such as Local Area Network (LAN), Wide Area Network (WAN), Wi-Fi, Internet, any short range or wide range communication). The engineering system 102 is also connected to the one or more client devices 120A-N via the network 104.

The engineering system 102 is connected to one or more engineering objects 108A-N. The one or more engineering objects 108A-N are devices in the technical installation 106 connected to each other via the network 104. The one or more engineering objects 108A-N may include servers, robots, switches, automation devices, programmable logic controllers (PLC)s, human machine interfaces (HMIs), motors, valves, pumps, actuators, sensors and other industrial equipment(s).

The client devices 120A-N may be a desktop computer, laptop computer, tablet, smart phone and the like. Each of the client devices 120A-N is provided with an engineering tool 122AN for generating and/or editing a plurality of engineering projects respectively.

The client devices 120A-N can access the engineering system 102 for automatically generating engineering projects. The client devices 120A-N can access cloud applications (such as providing performance visualization of the one or more engineering objects 108A-N via a web browser). Throughout the specification, the terms "client device" and "user device" are used interchangeably.

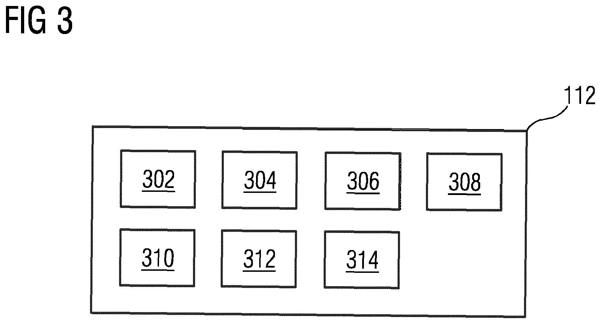

The engineering system 102 may be a standalone server or may be a remote server on a cloud computing platform. In a preferred embodiment, the engineering system 102 may be a cloud-based engineering system. The engineering system 102 is capable of delivering applications (such as cloud applications) for managing a technical installation 106 comprising the one or more engineering objects 108A-N. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the technical installation 106, and the client device(s) 120A-N. The interface (such as cloud interface) (not shown in FIG 1) may allow the engineers at the one or more client device (s) 120A-N to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to generate engineering programs. The platform 110 may further comprise an automation module 112 configured for generating engineering programs. Details of the automation module 112 is explained in FIG 3.

The database 118 stores the information relating to the technical installation 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100 where computing resources are delivered as a service over the platform 110. In another embodiment, the database 118is a location on a file system directly accessible by the automation module 112. The database 118 is configured to store engineering project files, engineering programs, object behavior model, parameter values associated with the one or more engineering objects 108A-N, test results, simulation results, status messages, one or more simulation instances, graphical programs, program logics, program logic patterns, engineering objects 108A-N and engineering object properties, one or more engineering object blocks, relationship information between the engineering objects, requirements, program update messages and the like.

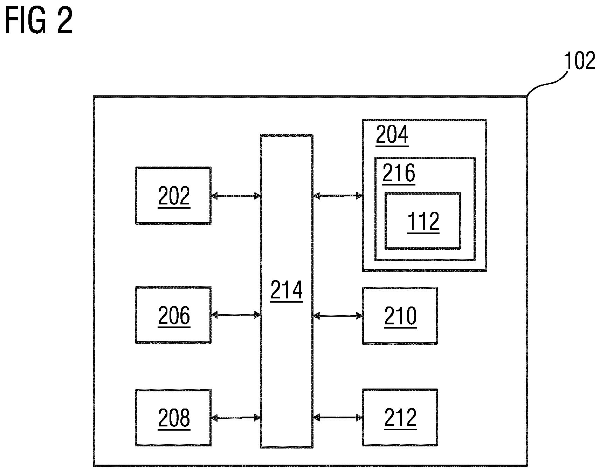

FIG 2 is a block diagram of the engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processing unit 202.

When executed by the processing unit 202, the automation module 112 causes the processing unit 202 to generate and optimize a plurality of test cases for a given engineering program. In one example, the plurality of test cases are optimized by eradicating those test cases from the plurality of test cases for which a determined test path coverage is lower than a threshold coverage value. The automation module 112 is configured to execute one or more programs stored in the servers 114 to cause the processing unit 202 to receive a request to generate a plurality of test cases for an engineering program. The engineering program comprises a plurality of code statements. The plurality of code statements comprises assignment statements, program element definition statements, and operation statements. The engineering program is designed to control operation of a plurality of devices in a technical installation. Examples of the plurality of devices include but is not limited to, programmable logic controllers, computers, motor drivers, control units, microcontrollers, human machine interfaces, edge servers, and industrial control systems. The technical installation 106 is at least one of an industrial manufacturing plant, an industrial processing plant, or an industrial power plant.

The plurality of devices function together in the technical installation 106 to achieve one or more objectives of the technical installation 106.

The automation module 112 cause the processing unit 202 to generate a plurality of tripartite graphs for the engineering program. Each of the generated plurality of tripartite graphs comprises a constraint satisfaction problem associated with a specific code statement of the plurality of code statements. Each of the plurality of tripartite graphs comprises a set of input variables, a set of constraints and a set of domain values associated with a specific code statement of the plurality of code statements. A first edge of each of the plurality of tripartite graph represents a presence of the set of input variables in a given constraint set and information about a plurality of values which the set of input variables is enabled to access from the given constraint set. In one example, each vertex of each of the plurality of tripartite graphs is represented as a vector. Each edge of each of the plurality of tripartite graphs is represented as a plurality of tensors.

The automation module 112 cause the processing unit 202 to generate a plurality of test case constraints for the engineering program by application of a machine learning algorithm on the plurality of tripartite graphs. The machine learning algorithm uses a graph convolution neural network which is configured to approximate each constraint of the constraint satisfaction problems of the plurality of tripartite graphs into the generated plurality of test case constraints. In other words, the graph convolutional neural network is configured to take the plurality of tripartite graphs as input and capture interdependencies and interactions between neighbouring vertices in the plurality of tripartite graphs. The graph convolution neural network is further configured to generate an ontological representation of the set of input variables. In one example, the machine learning algorithm is trained using one of a supervised learning process and an unsupervised learning process.

The automation module 112 cause the processing unit 202 to generate the plurality of test cases for the engineering program based on the plurality of tripartite graphs such that the generated plurality of test cases are limited by the generated plurality of test case constraints.

The automation module 112 cause the processing unit 202 to generate a knowledge graph for the engineering program by analysis of the plurality of code statements. The processing unit 202 is configured to analyse the plurality of code statements by application of a natural language processing algorithm on the plurality of code statements of the engineering program. The knowledge graph comprises information about relationships between the determined plurality of code statements. The knowledge graph further comprises information about data flow and control flow between each of the plurality of code statements.

The automation module 112 cause the processing unit 202 to determine a plurality of control flow paths of the engineering program at a plurality of scenarios based on an analysis of the generated knowledge graph. Each scenario of the plurality of scenarios denote a different input value and a different initial condition of a plurality of variables in the engineering program.

The automation module 112 cause the processing unit 202 to generate a key-value pair mapping between a plurality of variables in the engineering program and a plurality of values within the generated plurality of test cases based on an analysis of the generated knowledge graph.

The automation module 112 cause the processing unit 202 to detemine a subsequently executed code statement for each code statement of the plurality of code statements based on an analysis of the generated key-value pair mapping. The automation module 112 cause the processing unit 202 to determine a stack comprising the generated key-value pair mapping associated with each test case of the generated plurality of test cases. The automation module 112 cause the processing unit 202 to determine a test path taken by each test case of the generated plurality of test cases based on the analysis of the knowledge graph. The automation module 112 cause the processing unit 202 to determine a test path coverage for each of the generated plurality of test cases based on an analysis of the test path determined for each test case of the generated plurality of test cases. The automation module 112 cause the processing unit 202 to optimize each of the plurality of test cases based on an analysis of the determined test path coverage of each of the generated plurality of test cases. The test path taken by each test case of the plurality of test cases is determined based on a querying of the knowledge graph by the processing unit 202. In one example, the plurality of test cases are optimized by eradicating those test cases from the plurality of test cases for which a determined test path coverage is lower than a threshold.

The storage unit 206 may be a non-transitory storage medium configured for storing a database (e.g., database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102. In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210. The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of the automation module 112, such as those shown in FIG 1, according to an embodiment of the present invention. In FIG 3, the automation module 112 comprises a request handler module 302, an object behavior model generation module 304, an analysis module 306, a test case generator module 308, an engineering project database 310, a validation module 312 and a deployment module 314. FIG 3 is explained in conjunction with FIG 1 and FIG 2.

The request handler module 302 is configured for receiving the request to generate a plurality of test cases for an engineering program. For example, the request is received from one of the one or more users external to the industrial environment 100 via a network. In alternative embodiment, the request is received from the one of the one or more client devices 120A-N via the network 104.

The object behavior model generation module 304 is configured for a plurality of tripartite graphs for a plurality of code statements of the engineering program. In a preferred embodiment, the generated plurality of tripartite graphs comprises information about relationships between the set of variables corresponding to each code statement of the plurality of code statements of the engineering program and a set of Key performance indicators associated with the engineering program. The set of variables comprises a plurality of data and pointer variables defined and used in the plurality of code statements. The set of key performance indicators associated with the plurality of code statements are key performance indicators achieved by the one or more engineering objects 108A-N when the one or more engineering objects 108A-N executes the engineering program.

The analysis module 306 is configured for analyzing the plurality of tripartite graphs associated with the engineering program.

The test case generator module 308 is configured for generating the plurality of test cases for the engineering program. Each of the generated plurality of test cases contains a set of values assigned to one or more variables and arguments used in the engineering program. A flow of the engineering program depends on the set of values assigned to the one or more variables and arguments used in the engineering program. For example, if an argument in the engineering program is used in conjunction with a conditional statement, a loop statement, or a jump statement then a processor which executes the engineering program, may execute different code statements depending on a value given to the argument. In other words, depending on initial values and input conditions entered into the one or more variables and arguments, the engineering program has a plurality of flow paths which are different from each other.

The engineering project database 310 is configured for storing an engineering project library comprising the engineering program. The engineering project database 310 is configured to store information about the one or more engineering objects 108A-N such as physical connections between the one or more engineering objects 108A-N, and a plurality of parameter values associated with the one or more engineering objects 108A-N and the physical connections. The engineering project database 310 is configured for continuously updating the engineering project library with updated versions of the engineering projects. Also, the engineering project database 310 is configured for maintaining the engineering project library.

The validation module 312 is configured to generate a simulation instance for the engineering program. In one example, the simulation instance is a digital twin of the one or more engineering objects 108A-N which are functioning based on the engineering program. The validation module 312 is configured to simulate execution of the generated engineering program in the second engineering environment in a simulation environment by executing the set of logical block on the generated simulation instance. The validation module 312 is configured to determine that the engineering program is valid based on a result of the simulated execution of the generated engineering program. The simulation environment emulates an actual technical installation such as technical installation 106. Further, the simulation environment may be a virtual setup of the actual technical installation 106. Also, the validation module 312 is configured for validating the behavior of the engineering program based on results of simulation.

The deployment module 314 is configured for deploying the second engineering project in real-time onto the second engineering environment based on the validation. Advantageously, the generated engineering program is deployed after the determination that the generated engineering program is valid.

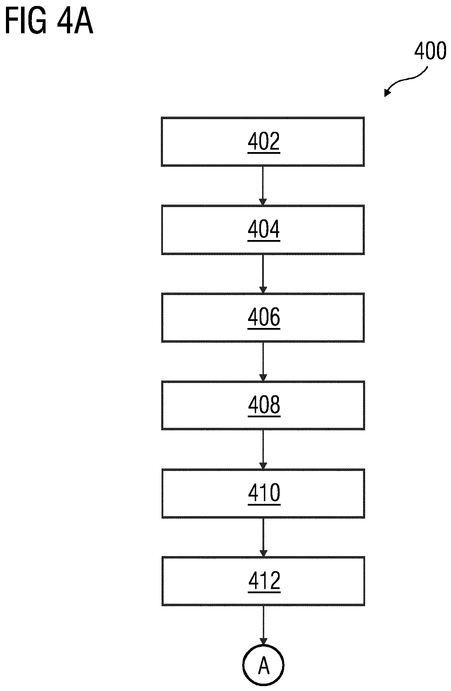

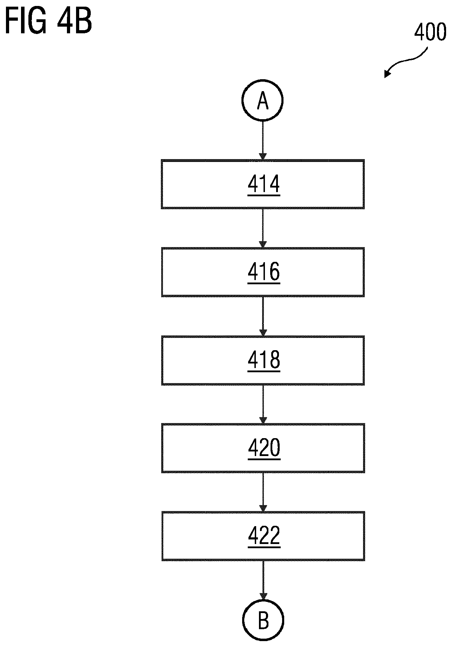

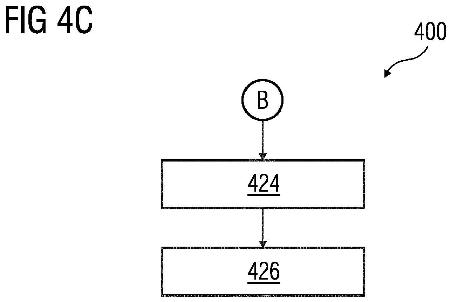

FIG 4A-C is a process flowchart illustrating an exemplary method of generating and optimizing a plurality of test cases for a specific engineering program, according to an embodiment of the present invention.

At step 402, a request to generate a plurality of test cases for an engineering program is received by the processing unit 202. The engineering program comprises a plurality of code statements. The plurality of code statements comprises assignment statements, program element definition statements, and operation statements. The engineering program is designed to control operation of a plurality of devices in a technical installation. Examples of the plurality of devices include but is not limited to, programmable logic controllers, computers, motor drivers, control units, microcontrollers, human machine interfaces, edge servers, and industrial control systems. The technical installation is at least one of an industrial manufacturing plant, an industrial processing plant, or an industrial power plant.

The plurality of devices function together in the technical installation to achieve one or more objectives of the technical installation.

At step 404, a plurality of tripartite graphs are generated for the engineering program. Each of the generated plurality of tripartite graphs comprises a constraint satisfaction problem associated with a specific code statement of the plurality of code statements. Each of the plurality of tripartite graphs comprises a set of input variables, a set of constraints and a set of domain values associated with a specific code statement of the plurality of code statements. A first edge of each of the plurality of tripartite graph represents a presence of the set of input variables in a given constraint set and information about a plurality of values which the set of input variables is enabled to access from the given constraint set. In one example, each vertex of each of the plurality of tripartite graphs is represented as a vector. Each edge of each of the plurality of tripartite graphs is represented as a plurality of tensors.

At step 406, a plurality of test case constraints are generated for the engineering program by application of a machine learning algorithm on the plurality of tripartite graphs. The machine learning algorithm is a graph convolution neural network which is configured to approximate each constraint of the constraint satisfaction problems of the plurality of tripartite graphs into the generated plurality of test case constraints. In other words, the graph convolution neural network is configured to take the plurality of tripartite graphs as input and capture interdependencies and interactions between neighbouring vertices in the plurality of tripartite graphs. Furthermore, the graph convolution neural network is configured to generate an ontological representation of the set of input variables. The plurality of test case constraints comprises constraints to values assigned to the plurality of test cases which is to be generated for the engineering program. In one example, the machine learning algorithm is trained using one of a supervised learning process and an unsupervised learning process.

At step 408, the plurality of test cases for the engineering program are generated based on the plurality of tripartite graphs in such a manner that the generated plurality of test cases are limited by the generated plurality of test case constraints.

At step 410, a knowledge graph is generated by the processing unit 202 for the engineering program based on analysis of the plurality of code statements. The processing unit 202 is configured to analyse the plurality of code statements by application of a natural language processing algorithm on the plurality of code statements of the engineering program. The knowledge graph comprises information about relationships between the determined plurality of code statements. The knowledge graph further comprises information about data flow and control flow between each of the plurality of code statements.

Advantageously, the generated knowledge graph is used for representing the plurality of code statements and for evaluation of a plurality of control flow paths in the engineering program. The plurality of control flow paths is predetermined as soon as the knowledge graph is available. Advantageously, the plurality of control flow paths are determined before a plurality of test case values are ready.

At step 412, the plurality of control flow paths of the engineering program at a plurality of scenarios are determined by the processing unit 202 based on an analysis of the generated knowledge graph. Each scenario of the plurality of scenarios denote a different input value and a different initial condition of a plurality of variables in the engineering program. Thus, the plurality of control flow paths are enumerated using a projection of the knowledge graph, in which the plurality of control flow paths is apparent. The plurality of control flow paths are calculated by traversing the knowledge graph from a root node to a leaf nodes. The leaf nodes of the knowledge graphs are nodes that have no further outgoing edges. The plurality of control flow paths takes into account different control structures such as conditionals and loops in the engineering program.

At step 414, a key-value pair mapping is generated by the processing unit 202 between a plurality of variables in the engineering program and a plurality of values within the generated plurality of test cases based on an analysis of the generated knowledge graph. The key-value pair mapping consists of the plurality of variables that are used within the engineering program and is part of information stored in the generated knowledge graph. Advantageously, the processing unit 202 is enabled to obtain the plurality of variables fast by querying the generated knowledge graph. The key-value pair mapping is initialized with a plurality of test case values of variables. For one or more variables where the plurality of test case values does not specify inputs, the one or more variables are initialized with values declared in the engineering program. The values of variables in the mapping are continuously updated as the generated knowledge graph is traversed.

In one example, a code statement of the plurality of statements is an assignment statement. In such a case, the assignment statement evaluates a constant on a right hand side of an assignment. A calculated value of the constant is then assigned to one or more variable on a left hand side of the assignment statement. In case the assignment statement comprises a mathematical expression, a current value of the one or more variables on the right hand side of the expression are derived from the generated key-value pair mapping. The generated key-value pair mapping is updated with a latest modification to a variable which is assigned a value.

In another example, the code statement comprises a conditional statement or a loop. In such a case, an expression is evaluated and then employed by a control flow construct such as the conditional or the loop to control a flow of the engineering program. In this case, the generated key-value pair mapping is referred to evaluate the expression. However, no updates are made to the generated key-value pair mapping. Advantageously, based on the expression evaluation, it is now possible to identify the next statement of the program that will be executed among multiple possible paths in the control flow.

Advantageously, using a combination of the aforementioned procedures, coverage paths in the engineering program can be evaluated for a given test case in terms of the plurality of code statements. Thus it is possible to calculate the possible paths that will actually be covered for any test case of the plurality of test cases. Advantageously, an enumerated list of the plurality of control flow paths is generated. Advantageously, a test path coverage of the plurality of test cases are generated.

At step 416, a subsequently executed code statement is determined by the processing unit 202 for each code statement of the plurality of code statements based on an analysis of the generated key-value pair mapping.

At step 420, a stack comprising the generated key-value pair mapping associated with each test case of the generated plurality of test cases is generated by the processing unit 202.

At step 422, a test path taken by each test case of the generated plurality of test cases is determined by the processing unit 202 based on the analysis of the knowledge graph.

At step 424, a test path coverage is determined by the processing unit 202 for each of the generated plurality of test cases based on an analysis of the test path determined for each test case of the generated plurality of test cases.

At step 426, each of the plurality of test cases is optimized by the processing unit 202 based on an analysis of the determined test path coverage of each of the generated plurality of test cases. The test path taken by each test case of the plurality of test cases is determined based on a querying of the knowledge graph by the processing unit 202. In one example, the plurality of test cases are optimized by eradicating those test cases from the plurality of test cases for which a determined test path coverage is lower than a threshold.

Advantageously, the generated knowledge graph of the engineering program is used to determine test path coverage of the plurality of test cases. A use of the knowledge graph enables quick evaluation of all possible test paths of the plurality of test cases. Advantageously, the test path coverage is determined efficiently.

Advantageously, determination of the plurality of control flow paths does not require the engineering program to be executed. The plurality of control flow paths are determined apriori by querying the knowledge graph. Then, the traversal of the graph is utilized to determine test path coverage. Thus, the actual execution of the program is performed separately from path coverage evaluation.

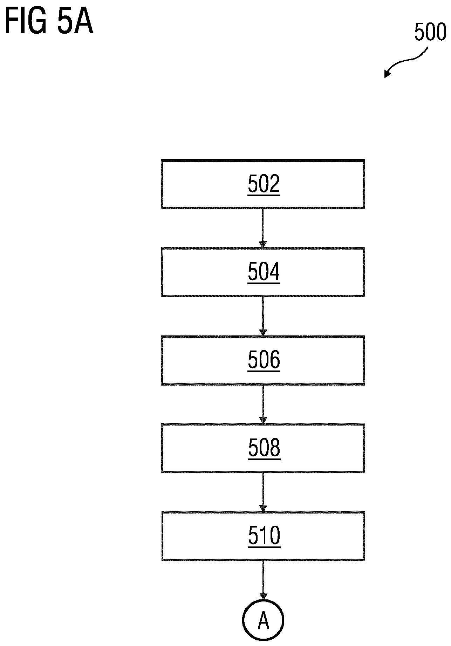

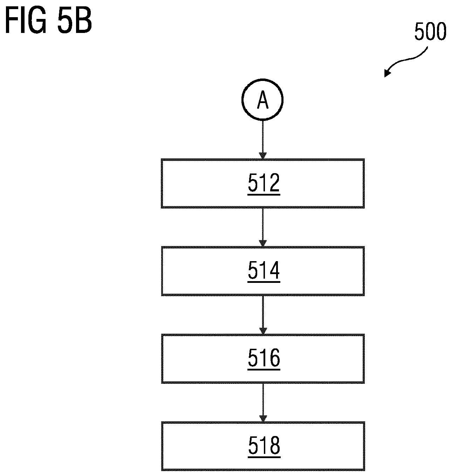

FIG 5A-B is a process flowchart 500 illustrating an exemplary method of generating and optimizing a plurality of test cases for a specific version of an engineering program, according to an embodiment of the present invention.

At step 502, a request to generate a plurality of test cases for a new version of an engineering program from an old version of the engineering program is received by the processing unit 202. The request comprises information associated with the new version and the old version of the engineering program. The request is received via an input device such as one of the one or more client devices 120A-N.

At step 504, a first knowledge graph and a second knowledge graph is generated by the processing unit 202 based on the new version and the old version of the engineering program respectively.

At step 506, a first set of control flow paths for the new version of the engineering program, and a second set of control flow paths for the old version of the engineering program are generated by the processing unit 202 based on the first knowledge graph and the second knowledge graph.

At step 508, one or more control flow paths of the first set of control flow paths which are different compared to one or more corresponding control flow paths of the second set of control flow paths are determined by the processing unit 202.

At step 510, the plurality of test cases is generated by the processing unit 202 for the new version of an engineering program based on the determined one or more control flow paths of the first set of control flow paths. Advantageously, the plurality of test cases are generated based on a difference between the new version and the old version of the engineering program. Thus, the plurality of test cases are tailor-made for new portions of the new version of the engineering program.

At step 512, the first knowledge graph and the second knowledge graph is analyzed by the processing unit 202 to determine one or more errors in the new version of the engineering program.

At step 514, the new version of the engineering program is modified by the processing unit 202 to eradicate the determined one or more errors in the new version of the engineering program. At step 516, a simulation instance for the engineering program is generated by the processing unit 202.

At step 518, execution of the generated engineering program in an industrial environment is simulated by the processing unit 202 by executing the engineering program on the generated simulation instance.

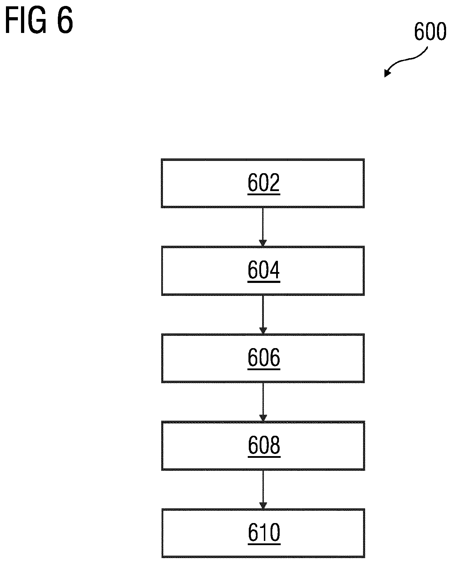

FIG 6 is a process flowchart 600 illustrating an exemplary method of optimizing a plurality of test cases of an engineering program, according to an embodiment of the present invention.

At step 602, a request to optimize a plurality of test cases is received by the processing unit 202. At step 604, a knowledge graph is generated for an engineering program based on analysis of a plurality of code statements of the engineering program. The knowledge graph comprises information about relationships between the plurality of code statements, and information about data flow and control flow between each of the plurality of code statements.

At step 606, a plurality of control flow paths of the engineering program at a plurality of scenarios is determined based on an analysis of the generated knowledge graph. Each scenario of the plurality of scenarios denote a different input value and a different initial condition of a plurality of variables in the engineering program.

At step 608, a test path coverage for each of the generated plurality of test cases is generated based on an analysis of the determined plurality of control paths and the generated knowledge graph.

At step 610, each of the plurality of test cases are optimized based on an analysis of the determined test path coverage of each of the plurality of test cases. In one example, the plurality of test cases are optimized by eradicating those test cases from the plurality of test cases for which a determined test path coverage is lower than a threshold. Advantageously, an optimal number of test cases are generated. The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of references

- 100: an industrial environment
- 102: an engineering system
- 120A-N: one or more client devices
- 104: a network
- 108A-N: one or more engineering objects
- 120A-N: one or more client devices
- 110: a platform
- 112: an automation module
- 114: a server
- 116: a network interface
- 118: a database
- 202: a processor(s)
- 204: an accessible memory
- 206: a storage unit
- 208: a communication interface
- 210: an input-output unit
- 212: a network interface
- 214: a bus
- 216: an integrated development environment (IDE)
- 302: a request handler module,
- 304: an object behavior model generation module,
- 306: an analysis module,
- 308: a modifier module
- 310: an engineering project database
- 312: a validation module
- 314: a deployment module.

## Claims

1. A method of generating and optimizing test cases for an engineering program based on a constraint satisfaction problem, the method comprising:
receiving, by a processing unit (202), a request to generate a plurality of test cases for an engineering program which comprises a plurality of code statements;
generating, by the processing unit (202), a plurality of tripartite graphs for the engineering program, wherein each of the generated plurality of tripartite graphs represents a constraint satisfaction problem associated with a specific code statement of the plurality of code statements;
generating, by the processing unit (202), a plurality of test case constraints for the engineering program by application of a machine learning algorithm on the plurality of tripartite graphs;
generating, by the processing unit (202), a plurality of test cases for the engineering program based on the plurality of test case constraints; and
optimizing, by the processing unit (202), the generated plurality of test cases based on an analysis of the engineering program.

2. The method according to claim 1, wherein optimizing the generated plurality of test cases comprises:
generating, by the processing unit (202), a knowledge graph for the engineering program by analysis of the plurality of code statements, wherein the knowledge graph comprises:
a) information about relationships between the plurality of code statements, and
b) information about data flow and control flow between each of the plurality of code statements;
determining, by the processing unit (202), a plurality of control flow paths of the engineering program at a plurality of scenarios based on an analysis of the generated knowledge graph;
determining, by the processing unit (202), a test path coverage for each of the generated plurality of test cases based on analysis of the determined plurality of control paths and the generated knowledge graph; and
optimizing, by the processing unit (202), each of the plurality of test cases based on an analysis of the determined test path coverage of each of the generated plurality of test cases.

3. The method according to claim 1 or 2, wherein
the machine learning algorithm uses a graph convolution neural network which is configured to generalize each constraint of the constraint satisfaction problems of the plurality of tripartite graphs into the generated plurality of test case constraints, and
the plurality of test cases are generated such that the generated plurality of test cases are limited by the generated plurality of test case constraints.

4. The method according to any of claims 1 to 3, wherein each of the plurality of tripartite graphs comprises a set of input variables, a set of constraints and a set of domain values associated with a specific code statement of the plurality of code statements.

5. The method according to any of the claim 2 to 4, wherein determining the test path coverage for each of the generated plurality of test cases comprises:
generating, by the processing unit (202), a key-value pair mapping between a plurality of variables in the engineering program and a plurality of values within the generated plurality of test cases based on an analysis of the generated knowledge graph; and
determining, by the processing unit (202), for each code statement of the plurality of code statements, a subsequently executed code statement based on an analysis of the generated key-value pair mapping.

6. The method according to any of the claims 2 to 5, wherein determining the test path coverage for each of the generated plurality of test cases further comprises:
generating, by the processing unit (202), a stack comprising the generated key-value pair mapping associated with each test case of the generated plurality of test cases;
determining, by the processing unit (202), a test path taken by each test case of the generated plurality of test cases based on the analysis of the knowledge graph; and
determining, by the processing unit (202), the test path coverage for each of the generated plurality of test cases based on an analysis of the test path determined for each test case of the generated plurality of test cases.

7. The method according to claim 6, wherein the test path taken by each test case of the plurality of test cases is determined based on a querying of the knowledge graph by the processing unit (202).

8. A method of generating and optimizing test cases for a new version of an engineering program based on an old version of the engineering program, the method comprising:
receiving, by the processing unit (202), a request to generate a plurality of test cases for a new version of an engineering program from an old version of the engineering program;
generating, by the processing unit (202), a first knowledge graph and a second knowledge graph based on the new version and the old version of the engineering program respectively;
determining, by the processing unit (202) a first set of control flow paths for the new version of the engineering program, and a second set of control flow paths for the old version of the engineering program, based on the first knowledge graph and the second knowledge graph;
determining, by the processing unit (202), one or more control flow paths of the first set of control flow paths, which are different when compared to one or more corresponding control flow paths of the second set of control flow paths; and
generating, by the processing unit (202), the plurality of test cases for the new version of an engineering program based on the determined one or more control flow paths of the first set of control flow paths.

9. The method according to claim 8, further comprising:
analyzing, by the processing unit (202), the first knowledge graph and the second knowledge graph to determine one or more errors in the new version of the engineering program;
modifying, by the processing unit (202), the new version of the engineering program, to eradicate the determined one or more errors in the new version of the engineering program.

10. The method according to claim 8 or 9, further comprising:
generating, by the processing unit (202), a simulation instance for the engineering program; and
simulating, by the processing unit (202), execution of the generated engineering program in an industrial environment by executing the engineering program on the generated simulation instance.

11. A method of optimizing a plurality of test cases, the method comprising:
receiving, by the processing unit (202), a request to optimize a plurality of test cases;
generating, by the processing unit (202), a knowledge graph for an engineering program, by analysis of a plurality of code statements of the engineering program, wherein the knowledge graph comprises:
c) information about relationships between the plurality of code statements, and
d) information about data flow and control flow between each of the plurality of code statements;
determining, by the processing unit (202), a plurality of control flow paths of the engineering program at a plurality of scenarios, based on an analysis of the generated knowledge graph;
determining a test path coverage for each of the generated plurality of test cases based on an analysis of the determined plurality of control paths and the generated knowledge graph; and
optimizing, by the processing unit (202) each of the plurality of test cases based on an analysis of the determined test path coverage of each of the plurality of test cases.

12. The method according to claim 11, wherein the test path taken by each test case of the plurality of test cases is determined based on a querying of the knowledge graph by the processing unit (202).

13. An engineering system for generation of test cases, wherein the engineering system comprises:
one or more processing units (202); and
a memory (204) coupled to the one or more processing units, wherein the memory comprises an automation module stored in the form of machine-readable instructions executable by the one or more processor(s), wherein the automation module (112) is capable of performing a method according to any of the claims 1-12.

14. An industrial environment (100) comprising:
an engineering system (102) as claimed in claim 13;
a technical installation (106) comprising one or more physical components; and
one or more client devices (120A-N) communicatively coupled to the engineering system (102) via a network (104), wherein the engineering system (102) is configured to perform a method according to any of the claims 1 to 12.

15. A computer-program product, having machine-readable instructions stored therein, that when executed by a processing units (202), cause the processing units to perform a method according to any of the claims 1-12.
